# EUROPÄISCHE PATENTANMELDUNG

(11) **EP 2 708 313 A1**
(43) Veröffentlichungstag der Anmeldung: **19.03.2014**
(21) Anmeldenummer: 12006558.6
(22) Anmeldetag: 18.09.2012
(51) Int. Cl.: B23Q 7/04, B23Q 41/02

(54) **Verfahren und Vorrichtung zur automatisierten Bearbeitung von Werkstücken in Fertigungszellen**

(71) Anmelder: Zimmer & Kreim GmbH & Co. KG, 64395 Brensbach (DE)
(72) Erfinder: Emelt, Wolfgang, 74206 Bad Wimpfen (DE)
(74) Vertreter: Lenz, Steffen

(57) **Zusammenfassung**

Es werden ein Verfahren und eine Vorrichtung zur automatisierten Bearbeitung von Werkstücken in einer ersten Fertigungszelle (1) vorgeschlagen. Die erste Fertigungszelle umfasst ein erstes Magazin (2), in welchem die Werkstücke und gegebenenfalls Werkzeuge bevorratet werden; wenigstens eine erste Werkzeugmaschine (6), mittels welcher die Werkstücke und gegebenenfalls die Werkzeuge bearbeitet werden; sowie einen ersten Manipulator (4), mittels welchem die Werkstücke und gegebenenfalls die Werkzeuge zwischen dem ersten Magazin und der ersten Werkzeugmaschine transportiert werden. Die Erfindung sieht vor, dass zumindest einige der Werkstücke und gegebenenfalls der Werkzeuge mittels des ersten Manipulators an eine Übergabestation (301) übergeben werden, wonach sie von der Übergabestation an einen zweiten Manipulator (104) einer zweiten Fertigungszelle (101)übergeben werden. Letztere umfasst wenigstens eine zweite Maschine (109, 110), bei welcher es sich um eine zweite Werkzeugmaschine, eine Waschmaschine, eine Messmaschine und/oder eine Verpackungsmaschine handeln kann, vorzugsweise ein zweites Magazin sowie den zweiten Manipulator, mittels welchem die Werkstücke und gegebenenfalls die Werkzeuge zwischen der zweiten Maschine und der Übergabestation sowie vorzugsweise auch dem zweiten Magazin transportiert werden.

## Beschreibung

Die Erfindung betrifft ein Verfahren zur automatisierten Bearbeitung von Werkstücken in einer ersten Fertigungszelle mit
(a) wenigstens einem ersten Magazin, in welchem zumindest die Werkstücke und gegebenenfalls Werkzeuge bevorratet werden;
(b) wenigstens einer ersten Werkzeugmaschine, mittels welcher die Werkstücke und gegebenenfalls die Werkzeuge bearbeitet werden; sowie
(c) wenigstens einem ersten Manipulator, mittels welchem die Werkstücke und gegebenenfalls die Werkzeuge zwischen dem ersten Magazin und der ersten Werkzeugmaschine transportiert werden.

Die Erfindung bezieht sich ferner auf eine insbesondere zur Durchführung eines solchen Verfahrens geeignete Vorrichtung zur automatisierten Bearbeitung von Werkstücken, mit einer ersten Fertigungszelle, umfassend:
(a) wenigstens ein erstes Magazin, welches zur Bevorratung zumindest der Werkstücke und gegebenenfalls von Werkzeugen ausgebildet ist;
(b) wenigstens eine erste Werkzeugmaschine zur Bearbeitung der Werkstücke und gegebenenfalls der Werkzeuge;
(c) wenigstens einen ersten Manipulator, welcher zum Transportieren der Werkstücke und gegebenenfalls der Werkzeuge zwischen dem ersten Magazin und der ersten Werkzeugmaschine ausgebildet ist; sowie
(d) eine, insbesondere zentrale, Steuereinrichtung, welche zumindest mit dem ersten Manipulator und der ersten Werkzeugmaschine wirkverbunden ist, um diese zu steuern.

Ein derartiges Verfahren zur automatisierten Bearbeitung von Werkstücken sowie eine Vorrichtung zu seiner Durchführung ist beispielsweise aus der EP 1 607 174 A1 bekannt, welche hiermit vollumfänglich zum Gegenstand der vorliegenden Offenbarung gemacht wird.

Die Vorrichtung umfasst hierbei eine sogenannte, auch mit FMC ("flexible manufacturing cell") bezeichnete Fertigungszelle, in welcher verschiedene Bearbeitungsschritte der Werkstücke, welche über eine einzelne Bearbeitungstechnologie hinausgehen, funktional miteinander verbunden werden. Die Fertigungszelle umfasst hierbei in der Regel einen von einer, insbesondere zentralen, Steuereinrichtung gesteuerten Manipulator, bei welchem es sich beispielsweise um einen schienengeführten Roboter mit mehreren, beispielsweise vier Freiheitsgraden, einen mehrachsigen, z.B. einen sechsachsigen Industrieroboter oder dergleichen handeln kann. Im Arbeitsraum des Roboters umfasst die Fertigungszelle überdies ein Magazin nach Art eines Lagers, in welchem einerseits die zu bearbeitenden Werkstücke an vorgegebenen Plätzen auf Vorrat gehalten, aber auch bereits teil- oder endbearbeitete Werkstücke zwischen- oder endgelagert werden, bevor sie dem Magazin entnommen werden. Darüber hinaus ist die Fertigungszelle mit wenigstens einer Werkzeugmaschine ausgestattet, welche zwecks ihrer Steuerung ebenfalls mit der Steuereinrichtung kommuniziert und mittels des Manipulators mit den Werkstücken, aber auch mit Werkzeugen oder diese tragenden Paletten bestückt werden kann, welche der Manipulator zwischen der/den Werkzeugmaschine(n) und dem Magazin hin und her zu transportieren vermag. Bei den Werkzeugmaschinen kann es sich praktisch um beliebige bekannte Werkzeugmaschinen handeln, wobei wenigstens eine der Werkzeugmaschinen häufig von einer Erodiermaschine gebildet ist, da sich hier im Hinblick auf die relativ langen Bearbeitungszeiten ein vollautomatisierter Betrieb als besonders wünschenswert darstellt. Alternativ oder zusätzlich kann die Fertigungszelle beispielsweise Fräs-, Bohr-, Schleifmaschinen oder dergleichen umfassen, so dass ein jeweiliges Werkstück in der Fertigungszelle in automatisierter Weise verschiedene Bearbeitungsabläufe erfahren kann. Die Werkzeuge der jeweiligen Werkzeugmaschinen, wie beispielsweise Fräs-, Bohr-, Schleifwerkzeuge oder Erodierelektroden, können ebenfalls in automatisierter Weise mittels des Manipulators zwischen dem Magazin und der jeweiligen Werkzeugmaschine hin und her transportiert und an der Werkzeugmaschine gespannt, von dieser gelöst und/oder im Magazin an einem vorgegebenen Platz abgelegt werden. Ferner können auch die Werkzeuge selbst, welche von einer jeweiligen Werkzeugmaschine der Fertigungszelle benötigt werden, in automatisierter Weise bearbeitet bzw. erzeugt werden, so dass die Werkzeuge, welche zur Bearbeitung bestimmter Werkstücke benötigt werden, gleichfalls mittels einer oder mehrerer, an der Fertigungszelle beteiligten Werkzeugmaschinen bearbeitet werden können. Darüber hinaus kann eine solche Fertigungszelle weitere Maschinen umfassen, wobei exemplarisch automatisierte Waschmaschinen, Messmaschinen oder Verpackungsmaschinen erwähnt seien, welche zum Waschen bzw. Vermessen der Werkstücke oder auch der jeweiligen Werkzeuge bzw. zum Verpacken fertig bearbeiteter Werkstücke dienen können. Ferner seien beispielsweise sogenannte Transferstationen erwähnt, an welchen die Werkstücke oder Werkzeugs mittels des Manipulators abgelegt werden können und welche einen manuellen Eingriff in den Prozess derart ermöglichen, dass das Werkstück der Transferstation manuell von außerhalb der Fertigungszelle entnommen werden kann, um es z.B. visuell begutachten und/oder erforderlichenfalls zusätzliche, z.B. manuelle Bearbeitungsschritte vorzunehmen. Ein Zutritt in die Fertigungszelle ist dabei insbesondere aufgrund Kollisionsgefahr mit dem Manipulator zu vermeiden, weshalb die Fertigungszelle in der Regel mit einem mechanischen (z.B. in Form einer mit Nottüren versehenen Schutzwandung) oder elektronischen Umgrenzung (z.B. in Form von Lichtschranken oder dergleichen, welche den Prozess unterbrechen, sofern sie einen Eingriff erkennen) ausgestattet ist.

Neben der Möglichkeit einer vollautomatisierten Bearbeitung der Werkstücke an gegebenenfalls verschiedenartigen Werkzeugmaschinen einschließlich weiterer Maschinen der vorgenannten Art, was wiederum mit der Möglichkeit eines nur gering personalaufwändigen Dauerbetriebs einhergeht, besteht ein weiterer Vorteil solcher Fertigungszelle darin, dass sie praktisch beliebig um weitere Maschinen oder Magazine ergänzt werden können, welche dann gleichfalls im Arbeitsraum des Manipulators positioniert und programmtechnisch in die Steuereinrichtung eingebunden werden können. Handelt es sich bei dem Manipulator insbesondere um einen führungs-, beispielsweise schienengebundenen Manipulator, so kann auch die z.B. modulartig aufgebaute Führung um weitere Führungsmodule erweitert werden, um den Arbeitsraum des Manipulators in dem erforderlichen Maß zu vergrößern.

Indes besteht hierbei häufig ein Problem darin, dass der zur Verfügung stehende Raum in der Fertigungsstätte - sei es aufgrund der räumlichen Dimensionen der Fertigungshalle insgesamt oder sei es aufgrund benachbarter, nicht in die Fertigungszelle integrierter Maschinen - begrenzt ist und einer Erweiterung des Arbeitsraumes des Roboters dadurch Grenzen gesetzt sind, zumal es sich bei der Führung des Manipulators in aller Regel, nicht zuletzt aufgrund der in aller Regel erforderlichen, nur sehr geringen Toleranzen, um eine Linearführung handelt. Andererseits birgt eine zu hohe Anzahl an (Werkzeug)maschinen, welche in einer Fertigungszelle über den Manipulator funktional miteinander sowie mit dem Magazin verbunden sind, die Gefahr von relativ langen Standzeiten der gesamten Maschinen, da beispielsweise im Falle einer Wartung oder eines Schadens der Manipulator und damit die gesamte Fertigungszelle stillgelegt werden muss, andernfalls sie auch Sicherheitsgründen nicht betreten werden kann.

Der Erfindung liegt daher die Aufgabe zugrunde ein Verfahren und eine Vorrichtung zur automatisierten Bearbeitung von Werkstücken der eingangs genannten Art auf einfache Weise dahingehend weiterzubilden, dass unter zumindest weitgehender Vermeidung der vorgenannten Nachteile die Flexibilität der Fertigungszelle erhöht wird.

In verfahrenstechnischer Hinsicht wird diese Aufgabe erfindungsgemäß bei einem Verfahren der eingangs genannten Art dadurch gelöst, dass zumindest einige zu bearbeitende und/oder teilweise oder gänzlich bearbeitete Werkstücke und gegebenenfalls Werkzeuge mittels des ersten Manipulators an eine Übergabestation übergeben werden, wonach sie von der Übergabestation an wenigstens einen zweiten Manipulator wenigstens einer zweiten Fertigungszelle übergeben werden mit
(d) wenigstens einer zweiten Maschine aus der Gruppe
   - zweite Werkzeugmaschine, mittels welcher die Werkstücke und gegebenenfalls die Werkzeuge vor- oder weiter bearbeitet werden;
   - Waschmaschine, mittels welcher die Werkstücke und gegebenenfalls die Werkzeuge gewaschen werden;
   - Messmaschine, mittels welcher die Werkstücke und gegebenenfalls die Werkzeuge vermessen werden; und
   - Verpackungsmaschine, mittels welcher die Werkstücke und gegebenenfalls die Werkzeuge verpackt werden; sowie
(e) wenigstens dem zweiten Manipulator, mittels welchem die Werkstücke und gegebenenfalls die Werkzeuge zwischen der zweiten Maschine und der Übergabestation transportiert werden.

In vorrichtungstechnischer Hinsicht sieht die Erfindung zur Lösung dieser Aufgabe bei einer Vorrichtung der eingangs genannten Art überdies vor, dass innerhalb des Arbeitsraumes des ersten Manipulators eine Übergabestation angeordnet ist, welche darüber hinaus innerhalb des Arbeitsraumes eines zweiten Manipulators wenigstens einer zweiten Fertigungszelle angeordnet ist, umfassend:
(e) wenigstens eine zweite Maschine aus der Gruppe
   - zweite Werkzeugmaschine zur Vor- oder Weiterbearbeitung der Werkstücke und gegebenenfalls der Werkzeuge;
   - Waschmaschine zum Waschen der Werkstücke und gegebenenfalls der Werkzeuge;
   - Messmaschine zum Vermessen der Werkstücke und gegebenenfalls der Werkzeuge; und
   - Verpackungsmaschine zum Verpacken der Werkstücke und gegebenenfalls der Werkzeuge,
   sowie
(f) wenigstens den zweiten Manipulator, welcher zum Transportieren der Werkstücke und gegebenenfalls der Werkzeuge zwischen der zweiten Maschine und der Übergabestation ausgebildet ist,
wobei zumindest der zweite Manipulator und die zweite Maschine der zweiten Fertigungszelle mit der Steuereinrichtung der ersten Fertigungszelle wirkverbunden sind und die Steuereinrichtung zur Koordination zumindest des ersten Manipulators mit dem zweiten Manipulator derart ausgebildet ist, dass zu bearbeitende und/oder teilweise oder gänzlich bearbeitete Werkstücke und gegebenenfalls Werkzeuge von dem ersten Manipulators an die Übergabestation und von dort an den zweiten Manipulator übergebbar sind.

Die Erfindung sieht folglich eine Unterteilung des gesamten Fertigungsprozesses in mehrere, beispielsweise zwei oder auch mehr als zwei, Fertigungszellen vor, welche über die Übergabestation derart funktional miteinander in Verbindung stehen, dass die Werkstücke und vorzugsweise auch die Werkzeuge mittels der einer jeweiligen Fertigungszelle zugeordneten Manipulatoren zumindest von der einen in die andere Fertigungszelle transferiert werden können. Dies erleichtert einerseits eine mögliche Erweiterung einer bestehenden Fertigungszelle in erheblichem Maße, da die zweite Fertigungszelle an einem praktisch beliebigen Ort positioniert werden kann, wobei lediglich sichergestellt werden muss, dass sich die Übergabestation im Arbeitsraum der Manipulatoren beider Fertigungszellen befindet. Andererseits besteht im Falle einer Wartung oder Reparatur einzelner Komponenten der beteiligten Fertigungszellen, wie insbesondere der Werkzeug- oder anderen Maschinen oder auch der Manipulatoren, die Möglichkeit eines fortwährenden Betriebs des anderen Fertigungszelle, so dass die Redundanz erhöht und insbesondere etwaige Standzeiten der gesamten Vorrichtung auf ein Mindestmaß reduziert werden. Die Übergabestation selbst kann, wie weiter unten noch näher erläutert, von sehr einfachem Aufbau sein und muss im Grunde vornehmlich eine Zwischenlagerung von Werkstücken bzw. Werkzeugen ermöglichen, wenn letztere von dem einen Manipulator dort abgelegt und von dem anderen von dort ergriffen werden sollen. Die Übergabestation kann gegebenenfalls auch für einen translatorischen Transport der Werkstücke/Werkzeuge zwischen voneinander beabstandeten Fertigungszellen sorgen, oder sie kann - wie ebenfalls noch weiter unten näher erläutert - die Werkstücke/Werkzeuge rotatorisch an die eine oder andere Fertigungszelle - oder genauer: an deren jeweiligen Manipulator - transportieren. In diesen Fällen kommuniziert sie zweckmäßigerweise gleichfalls mit der Steuereinrichtung.

Die Erfindung macht es selbstverständlich auch möglich, dass zumindest einige zu bearbeitende und/oder teilweise oder gänzlich bearbeitete Werkstücke und gegebenenfalls Werkzeuge mittels des zweiten Manipulators der zweiten Fertigungszelle an die Übergabestation übergeben werden, wonach sie von der Übergabestation an den ersten Manipulator der ersten Fertigungszelle übergeben werden. Derart ist ein praktisch beliebiger Transfer der Werkstücke zwischen den durch die Übergabestation funktional miteinander verbundenen Fertigungszellen "hin und her" sichergestellt, so dass der Fertigungsprozess insgesamt eine größtmögliche Flexibilität aufweist und z.B. durch steuerungstechnischen Eingriff beliebige kurzfristige Änderungen eines vormals geplanten Fertigungsablaufes vorgenommen werden können, welcher die Bearbeitung oder Lagerung von Werkstücken in anderen als den vormals angedachten Maschinen/Magazinen oder auch die Veränderung der zeitlichen Abfolge einzelner Bearbeitungsschritte eines oder mehrerer Werkstücke fertigungszellenübergreifend einschließt. Bei einer erfindungsgemäßen Vorrichtung ist zu diesem Zweck vorzugsweise vorgesehen, dass die Steuereinrichtung zur Koordination des ersten Manipulators mit dem zweiten Manipulator derart ausgebildet ist, dass zu bearbeitende und/oder teilweise oder gänzlich bearbeitete Werkstücke und gegebenenfalls Werkzeuge auch von dem zweiten Manipulators an die Übergabestation und von dort an den ersten Manipulator übergebbar, also praktisch beliebig zwischen den Fertigungszellen hin und her transferierbar, sind.

Darüber hinaus kann es aus Gründen einer hohen Flexibilität von Vorteil sein, wenn die Werkstücke und gegebenenfalls Werkzeuge ferner in wenigstens einem zweiten Magazin der zweiten Fertigungszelle bevorratet und mittels des zweiten Manipulators dem zweiten Magazin zu- und abgeführt werden. Folglich weist auch die zweite Fertigungszelle vorzugsweise wenigstens ein zweites Magazin auf, wobei der zweite Manipulator zum Zu- und Abführen der Werkstücke und gegebenenfalls von Werkzeugen in das bzw. aus dem zweiten Magazin ausgebildet ist.

Wie bereits angedeutet, ist zweckmäßig zumindest einer der Manipulatoren, insbesondere sowohl der erste als auch der zweite Manipulator, von einem entlang einer stationären Führung einer jeweiligen Fertigungszelle gesteuert translatorisch verlagerbaren Manipulator gebildet ist, welcher insbesondere wenigstens drei weitere, translatorische und/oder rotatorische Freiheitsgrade aufweist. Hierbei kann beispielsweise ein führungsgebundener Sockel des Manipulators nach Art eines Karussells um eine vertikale Achse drehbar sein, während ein an dieser Achse angeordneter Greifer einerseits entlang dieser vertikalen Achse translatorisch höhenverlagerbar, andererseits gleichfalls translatorisch horizontal von dieser vertikalen Achse fort bzw. auf diese zu verlagerbar sein kann. Derartige Manipulatoren sind aus der eingangs erwähnten EP 1 607 174 A1 bekannt.

Wie ebenfalls bereits angedeutet, sollte jede Fertigungszelle während des Betriebs aus Sicherheitsgründen vor einem menschlichen Zutritt gesichert sein, wobei mechanische oder elektronische Barrieren, wie beispielsweise mit Nottüren, welche im Falle eines Öffnens zumindest den Manipulator stillsetzen, versehene Schutzwandungen, Lichtschranken mit entsprechender Funktion oder dergleichen in Betracht kommen.

Um eine Begehung der einen Fertigungszelle, beispielsweise zu Reparatur- oder Wartungszwecken, zu ermöglichen und ohne jede sicherheitstechnische Bedenken einen fortwährenden Fertigungsbetrieb der anderen Fertigungszelle(n) aufrechterhalten zu können, sieht eine vorteilhafte Ausgestaltung der Übergabestation vor, dass sie die erste Fertigungszelle derart von der zweiten Fertigungszelle abtrennt, um einen Zutritt von der ersten Fertigungszelle in die zweite Fertigungszelle und umgekehrt stets zu verhindern.

Dies kann beispielsweise dadurch geschehen, dass die Übergabestation eine jeweils nur von einer Fertigungszelle zugängliche Aufnahmekammer aufweist, so dass ein Transfer von Werkstücken und/oder Werkzeugen von der einen zu der anderen Fertigungszelle dadurch vonstatten gehen kann, indem die Aufnahmekammer
- in Richtung des ersten Manipulators der ersten Fertigungszelle ausgerichtet wird, wonach wenigstens ein Werkstück und/oder Werkzeug mittels des ersten Manipulators in der Aufnahmekammer abgelegt wird, wonach die Aufnahmekammer in Richtung des zweiten Manipulators der zweiten Fertigungszelle ausgerichtet wird, wonach das Werkstück und/oder Werkzeug mittels des zweiten Manipulators der Aufnahmekammer entnommen wird;
   und/oder
- in Richtung des zweiten Manipulators der zweiten Fertigungszelle ausgerichtet wird, wonach wenigstens ein Werkstück und/oder Werkzeug mittels des zweiten Manipulators in der Aufnahmekammer abgelegt wird, wonach die Aufnahmekammer in Richtung des ersten Manipulators der ersten Fertigungszelle ausgerichtet wird, wonach das Werkstück und/oder Werkzeug mittels des ersten Manipulators der Aufnahmekammer entnommen wird.

Eine solche, eine jeweils nur von einer Fertigungszelle zugängliche Aufnahmekammer aufweisende Übergabestation ist zweckmäßigerweise mit der Steuereinrichtung wirkverbunden, um die Aufnahmekammer in einer mit den Bewegungen des ersten und zweiten Manipulators synchronisierten Weise sowohl in Richtung des ersten Manipulators der ersten Fertigungszelle als auch in Richtung des zweiten Manipulators der zweiten Fertigungszelle auszurichten.

Die Aufnahmekammer der Übergabestation kann in diesem Fall beispielsweise dadurch in Richtung des ersten Manipulators bzw. des zweiten Manipulators ausgerichtet werden, indem sie um eine, insbesondere vertikale, Achse gedreht wird. Eine in konstruktiver Hinsicht sehr einfach aufgebaute und kostengünstige Übergabestation kann sich folglich dadurch auszeichnen, dass ihre Aufnahmekammer, insbesondere um eine vertikale Achse, drehbar gelagert ist, wobei ein steuerbarer Drehantrieb der Aufnahmekammer mit der Steuereinrichtung wirkverbunden ist.

Darüber hinaus kann es von Vorteil sein, wenn die erste Fertigungszelle ausschließlich über wenigstens eine Übergabestation mit der zweiten Fertigungszelle funktional verbunden wird, während die Fertigungszellen im Übrigen räumlich getrennte Einheiten bilden.

Die Erfindung betrifft schließlich auch eine Übergabestation einer Vorrichtung zur automatisierten Bearbeitung von Werkstücken der oben genannten Art.

Weitere Merkmale und Vorteile der Erfindung ergeben sich aus der nachfolgenden Beschreibung einer exemplarischen Ausführungsform unter Bezugnahme auf die Zeichnungen. Dabei zeigen:
- Fig. 1: eine schematische Draufsicht auf eine Ausführungsform einer erfindungsgemäßen Vorrichtung zur automatisierten Bearbeitung von Werkstücken, welche zwei mittels einer Übergabestation funktional miteinander verbundene Fertigungszellen umfasst;
- Fig. 2: eine schematische perspektivische Ansicht der Übergabestation der Vorrichtung gemäß Fig. 1;
- Fig. 3: eine Seitenansicht der Übergabestation gemäß Fig. 2 in Richtung des Pfeils III der Fig. 4;
- Fig. 4: eine Seitenansicht der Übergabestation gemäß Fig. 2 und 3 in Richtung des Pfeils IV der Fig. 3; und
- Fig. 5: eine Draufsicht auf die Übergabestation gemäß Fig. 2 bis 4 von oben.

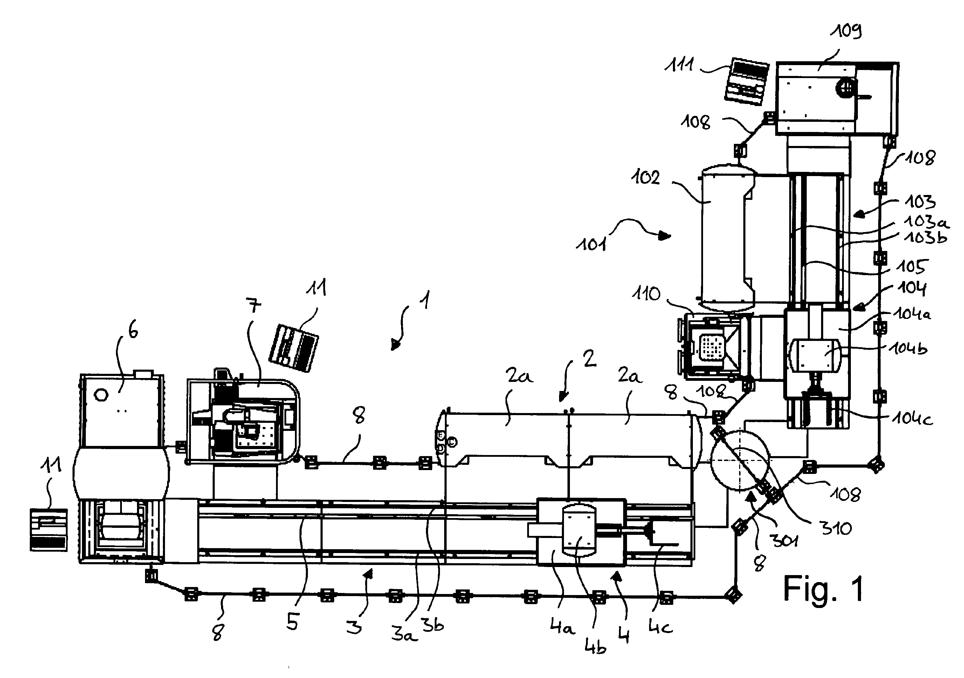

In Fig. 1 ist eine schematische Draufsicht auf ein Ausführungsbeispiel einer vollautomatisierten Vorrichtung zur Bearbeitung von Werkstücken wiedergegeben, wobei sich der in diesem Zusammenhang verwendete Begriff "Werkstück" insoweit auch auf Werkzeuge beziehen kann, als mittels der Vorrichtung auch Werkzeuge für andere Werkzeugmaschinen, wie beispielsweise Fräs-, Bohr-, Schleifwerkzeuge, Formwerkzeuge zur Herstellung von Kunststoff- oder metallischen Formteilen, Erodierelektroden und dergleichen bearbeitet bzw. hergestellt werden, es sich bei den "Werkstücken" folglich um in automatisierter Weise erzeugte Werkzeuge für andere Fertigungsprozesse handeln kann. Der Begriff "Werkzeug" bezieht sich in diesem Zusammenhang auf Werkzeuge, welche die an der Vorrichtung beteiligten Werkzeugmaschinen selbst verwenden und welche gleichfalls mittels der Vorrichtung selbst bearbeitet bzw. hergestellt werden können.

Die Vorrichtung umfasst beim vorliegenden Ausführungsbeispiel eine erste Fertigungszelle 1, welche ein erstes Lager in Form eines ersten Magazins 2 aufweist, das beispielsweise zwei modular aufgebaute Abteilungen 2a, 2b umfasst und zur Bevorratung von unbearbeiteten, zwischen- und/oder fertig bearbeiteten Werkstücken und/oder Werkzeugen der beteiligten Werkzeugmaschinen dient. Das erste Magazin 2 ist seitlich einer Führung 3 angeordnet, welche z.B. von einer Schienenführung mit zwei parallelen Schienensträngen 3a, 3b gebildet ist. Entlang der Führung 3 ist ein erster Manipulator 4 in Form eines Roboters geführt, welcher im vorliegenden Fall vier Freiheitsgrade aufweist. Hierbei ist ein Sockel 4a desselben einerseits entlang der Führung 3 translatorisch verfahrbar (erster Freiheitsgrad), was z.B. dadurch geschehen kann, dass ein gesteuert angetriebenes Zahnrad (nicht gezeigt) mit einer sich parallel zu der Führung 3 erstreckenden Zahnstange 5 kämmt. Andererseits ist ein Turm 4b des Manipulators um eine vertikale Achse rotatorisch schwenkbar ist (zweiter Freiheitsgrad). Ein Greifer 4c des Manipulators 4 ist darüber hinaus sowohl vertikal in Erstreckungsrichtung des Turmes 11 (dritter Freiheitsgrad) als auch horizontal von dem Turm 11 fort und zu diesem hin translatorisch verfahrbar (vierter Freiheitsgrad). Indes sind selbstverständlich auch andersartige Manipulatoren denkbar.

Die erste Fertigungszelle 1 umfasst darüber hinaus eine erste Werkzeugmaschine 6 zur Bearbeitung der Werkstücke und/oder Werkzeuge, bei welcher es sich beispielsweise um eine automatisierte Erodiermaschine, wie z.B. eine Senkerodiermaschine, oder aber auch um eine beliebige andersartige Werkzeugmaschine handeln kann. Darüber hinaus umfasst die erste Fertigungszelle 1 eine weitere Maschine 7, wie beispielsweise eine automatische Messmaschine, welche zum Vermessen der rohen, teilweise und/oder gänzlich bearbeiteten Werkstücke und/oder Werkzeuge dient. Sowohl die erste Werkzeug- bzw. Erodiermaschine 6 als auch die Messmaschine 7 ist - wie auch das Magazin 2 - im Arbeitsraum des ersten Manipulators 4 angeordnet, so dass sie sich jeweils in der Reichweite des Greifers 4c des ersten Manipulators 4 befinden und der erste Manipulator 4 die Werkstücke und/oder Werkzeuge zwischen dem ersten Magazin 2, der ersten Werkzeugmaschine 6 und der Messmaschine 7 gesteuert hin und her zu transportieren vermag, wobei sie mittels des ersten Manipulators 4 überdies in dem Magazin 2 abgelegt und diesem entnommen sowie an der jeweiligen Maschine 6, 7 lösbar festgelegt und gelöst werden können.

Die erste Fertigungszelle 1 ist ferner dadurch vor einem menschlichen Zutritt während des Betriebs gesichert, indem sie von einer Schutzwandung 8 mit mehreren, modularen Wandelementen umgeben ist, wobei die Schutzwandung 8 den gesamten Arbeitsraum des ersten Manipulators 4 einschließlich der von ihm bedienten Komponenten der Maschinen 6, 7, wie insbesondere Spanneinrichtungen derselben, sowie die dem Manipulator 4 zugewandten Innenseite des ersten Magazins 2 umgrenzt. Die Schutzwandung 8 weist zweckmäßig eine oder mehrere Nottüren (nicht gezeigt) auf, deren Öffnen ein unmittelbares Stillsetzen zumindest des Manipulators 4 zur Folge hat.

Die in Fig. 1 dargestellte Vorrichtung umfasst darüber hinaus eine zweite Fertigungszelle 101, welche ein zweites Lager in Form eines zweiten Magazins 102 aufweist, das im Wesentlichen dem ersten Magazin der ersten Fertigungszelle 1 entsprechen kann, beim vorliegenden Ausführungsbeispiel aber z.B. nur eine Abteilung aufweist und gleichfalls zur Bevorratung von unbearbeiteten, zwischen- und/oder fertig bearbeiteten Werkstücken und/oder Werkzeugen der beteiligten Werkzeugmaschinen zu dienen vermag. Das zweite Magazin 102 ist seitlich einer Führung 103 angeordnet, welche z.B. gleichfalls von einer Schienenführung mit zwei parallelen Schienensträngen 103a, 103b gebildet ist. Entlang der Führung 103 ist ein zweiter Manipulator 104 in Form eines Roboters geführt, welcher im vorliegenden Fall entsprechend des ersten Manipulators 4 aufgebaut ist und dementsprechend gleichfalls vier Freiheitsgrade aufweist. Die mit den Bezugzeichen 104a, 104b, 104c und 105 versehenen Komponenten des zweiten Manipulators 104 entsprechen insoweit den mit den Bezugszeichen 4a, 4b, 4c und 5 bezeichneten Komponenten des ersten Manipulators 4.

Die zweite Fertigungszelle 101 umfasst bei dem gezeigten Ausführungsbeispiel darüber hinaus zwei weitere Maschinen 109, 110, wobei es sich bei der Maschine 109 z.B. um eine vollautomatische Waschmaschine handeln kann, welcher mittels des zweiten Manipulators 104 die Werkstücke und/oder Werkzeuge aufgegeben und entnommen werden können. Bei der zweiten Maschine 110 kann es sich beispielsweise gleichfalls um eine Waschmaschine handeln, welche z.B. zur Reinigung von die Werkstücke und/oder Werkzeuge aufnehmenden Paletten (nicht gezeigt) dient und welche von ihrer dem zweiten Manipulator 104 abgewandten Seite einen manuellen Zugang gewährleistet, um dem Prozess Paletten zuführen und entnehmen zu können. Selbstverständlich können sowohl die erste 1 als auch die zweite Fertigungszelle 101 weitere Maschinen umfassen, wie beispielsweise weitere Werkzeugmaschinen, z.B. eine oder mehrere Fräs-, Bohr-, Schleifmaschinen oder auch weitere Erodiermaschinen und/oder automatische Verpackungsmaschinen (nicht dargestellt).

Die zweite Fertigungszelle 101 ist - wie auf die erste Fertigungszelle 1 - ihrerseits dadurch vor einem menschlichen Zutritt während des Betriebs gesichert, indem sie von einer Schutzwandung 108 mit mehreren, modularen Wandelementen umgeben ist, wobei die Schutzwandung 108 den gesamten Arbeitsraum des zweiten Manipulators 4 einschließlich der von ihm bedienten Komponenten der Maschinen 109, 110 sowie die dem Manipulator 104 zugewandten Innenseite des zweiten Magazins 102 umgrenzt. Die Schutzwandung 108 weist zweckmäßig eine oder mehrere Nottüren (nicht gezeigt) auf, deren Öffnen ein unmittelbares Stillsetzen zumindest des Manipulators 104 zur Folge hat.

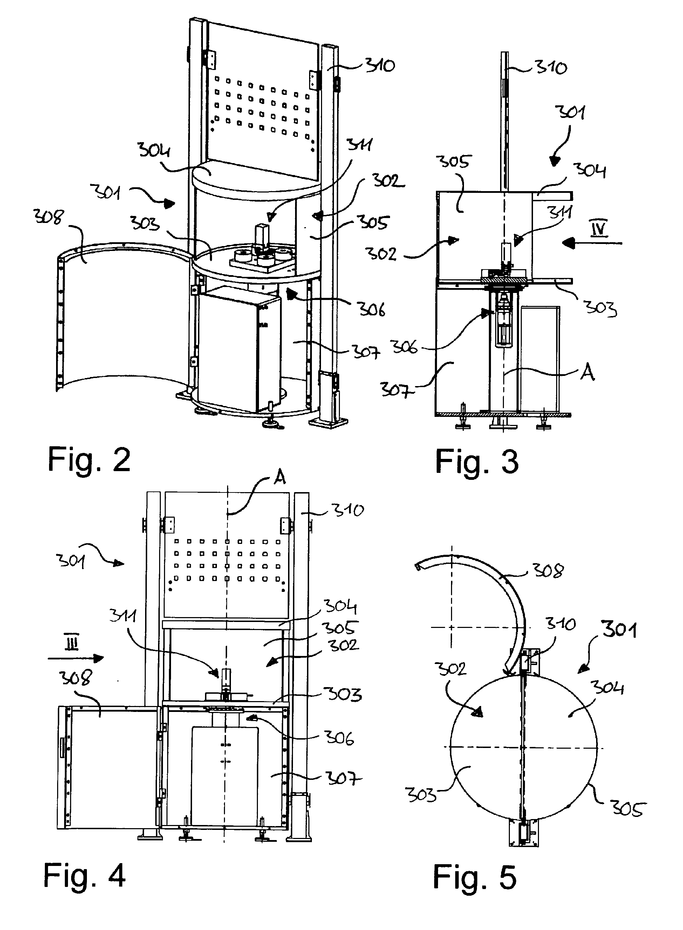

Die erste Fertigungszelle 1 ist von der zweiten Fertigungszelle 101 in funktionaler Hinsicht mittels einer Übergabestation 301 verbunden, welche im Arbeitsraum sowohl des ersten Manipulators 4 als auch des zweiten Manipulators 104 positioniert ist und sich im vorliegenden Fall etwa schräg zwischen den einander zugewandten Enden der Führungen 5, 105 der Manipulatoren 4, 104 angeordnet ist. Die Übergabestation 301, welche nachfolgend unter Bezugnahme auf die Fig. 2 bis 5 noch näher erläutert ist, dient zum Überführen von Werkstücken und/oder Werkzeugen zwischen der ersten 1 und der zweiten Fertigungszelle, wobei ein jeweiliger Manipulator 4, 401 ein jeweiliges Werkstück/Werkzeug in der Übergabestation 301 abzulegen vermag, wonach es von dem anderen Manipulator 401, 4 ergriffen werden kann. Auf diese Weise sind die Fertigungszellen 1, 101 miteinander wirkverbunden und kann ein jedes Werkstück/Werkzeug an beliebigen Maschinen 6, 7, 109, 110 beider Fertigungszellen 1, 101 bearbeitet bzw. in einem beliebigen Magazin 2, 102 beider Fertigungszellen 1, 101 abgelegt oder diesem entnommen werden.

Die Komponenten beider Fertigungszellen 1, 101, wie insbesondere die beiden Manipulatoren 4, 104 und die Maschinen 6, 7, 109, 110 sowie auch die Übergabestation 301, kommunizieren hierzu mit einer gemeinsamen Steuereinrichtung (nicht gezeigt), welche beispielsweise über geeignete Schnittstellen 11, 111 mit den jeweiligen Fertigungszellen 1, 101 verbunden sind.

Wie insbesondere auch den Fig. 2 bis 5 zu entnehmen ist, ist die Übergabestation 301 derart relativ zu der ersten 1 und der zweiten Fertigungszelle 101 zwischen deren Schutzwandungen 8, 108 angeordnet, dass sie die Fertigungszellen 1, 101 räumlich voneinander trennt und einen Zutritt von der einen 1, 101 in die andere Fertigungszelle 101, 1 beispielsweise dann verhindert, wenn sich eine der beiden Fertigungszellen 1, 101 zu Reparatur- oder Wartungszwecken außer Betrieb befindet, so dass die andere Fertigungszelle 1, 101; 101, 1 ohne jedwedes Sicherheitsrisiko für das Wartungspersonal weiter betrieben werden kann. Wie aus Fig. 2 bis 5 ersichtlich, umfasst die Übergabestation 301 im vorliegenden Fall eine zylindrische, insbesondere kreiszylindrische, Aufnahmekammer 302 mit einem etwa kreisförmigen Bodenteil 303 und einem gleichfalls etwa kreisförmigen, hierzu deckungsgleichen Deckelteil 304, welche die Unter- bzw. Oberseite eines Kreiszylinders bilden. Das Bodenteil 303 ist mit dem Deckelteil 304 über ein die Mantelfläche dieses Kreiszylinders bildendes Wandteil 305 verbunden, welches sich über einen Winkel von ca. 180° oder - wie es bei dem gezeigten Ausführungsbeispiel der Fall ist - über einen demgegenüber etwas größeren Winkel von etwa 190° bis etwa 200° zwischen dem Boden- 303 und dem Deckelteil 304 erstreckt, so dass je nach Ausrichtung der Aufnahmekammer 302 in Richtung der ersten 1 oder der zweiten Fertigungszelle 101 (siehe Fig. 1) die Aufnahmekammer 302 nur von einer der Fertigungszellen 1, 101 - oder genauer: nur von einem deren Manipulatoren 4, 104 - zugänglich ist. Der Aufnahmekammer 303 ist ein z.B. unterhalb deren Bodenteils 303 angeordneter Drehantrieb 306 zugeordnet, um die Aufnahmekammer 302 mittels der Steuereinrichtung (nicht gezeigt) gesteuert um eine vertikale Achse A (siehe Fig. 3 und 4) zu verdrehen und sie somit entweder in Richtung des ersten Manipulators 4 der ersten Fertigungszelle 1 oder in Richtung des zweiten Manipulators 104 der zweiten Fertigungszelle 101 ausrichten zu können. Der Drehantrieb 306 ist in einem gleichfalls kreiszylindrischen, mit dem Boden- 303 und dem Deckelteil 303 fluchtenden Gehäuse 307 untergebracht, welches eine in Fig. 2 bis 5 geöffnete Tür 308 aufweist, um den Drehantrieb 306 erforderlichenfalls zugänglich zu machen. Das Gehäuse 307 erstreckt sich im Wesentlichen vom Boden bis zu dem Bodenteil 303 der Aufnahmekammer 302, um für eine gänzliche räumliche Trennung der Fertigungszellen 1, 101 zu sorgen (vgl. auch Fig. 1). Zu demselben Zweck ist der Übergabestation ein Schutzwandelement 310 zugeordnet, dessen beide Träger an diametral entgegengesetzten Stellen unmittelbar seitlich des Umfangs der Übergabestation 301 angeordnet sind, wobei die beiden Träger des Schutzwandelementes 310 unmittelbar oberhalb des Deckelteils 304 der Aufnahmekammer mittels eines Wandelementes miteinander verbunden sind (vgl. auch Fig. 1). Auf der Oberseite des Bodenteils 303 der Aufnahmekammer 302 der Übergabestation 301 sind ferner geeignete Strukturen 311 zur Aufnahme eines Werkstücks/Werkzeugs oder insbesondere auch einer dieses tragenden Palette (nicht gezeigt) vorgesehen.

Die Übergabestation 301 verbindet folglich die beiden im Übrigen räumlich voneinander getrennten Fertigungszellen 1, 101 derart miteinander, dass ein praktisch beliebiger Austausch von Werkzeugen, Werkstücken und/oder diese tragenden Paletten zwischen den Fertigungszellen 1, 101 gewährleistet ist, wobei es freilich auch möglich ist, weitere Fertigungszellen über weitere Übergangsstationen 301 mit der ersten 1 und/oder mit der zweiten Fertigungszelle 101 funktional miteinander zu verbinden (nicht gezeigt).

## Patentansprüche

1. Verfahren zur automatisierten Bearbeitung von Werkstücken in einer ersten Fertigungszelle (1) mit
(a) wenigstens einem ersten Magazin (2), in welchem zumindest die Werkstücke und gegebenenfalls Werkzeuge bevorratet werden;
(b) wenigstens einer ersten Werkzeugmaschine (6), mittels welcher die Werkstücke und gegebenenfalls die Werkzeuge bearbeitet werden; sowie
(c) wenigstens einem ersten Manipulator (4), mittels welchem die Werkstücke und gegebenenfalls die Werkzeuge zwischen dem ersten Magazin (2) und der ersten Werkzeugmaschine (6) transportiert werden,
**dadurch gekennzeichnet, dass** zumindest einige zu bearbeitende und/oder teilweise oder gänzlich bearbeitete Werkstücke und gegebenenfalls Werkzeuge mittels des ersten Manipulators (4) an eine Übergabestation (301) übergeben werden, wonach sie von der Übergabestation (301) an wenigstens einen zweiten Manipulator (104) wenigstens einer zweiten Fertigungszelle (101) übergeben werden mit
(d) wenigstens einer zweiten Maschine (109, 110) aus der Gruppe
- zweite Werkzeugmaschine, mittels welcher die Werkstücke und gegebenenfalls die Werkzeuge vor- oder weiter bearbeitet werden;
- Waschmaschine, mittels welcher die Werkstücke und gegebenenfalls die Werkzeuge gewaschen werden;
- Messmaschine, mittels welcher die Werkstücke und gegebenenfalls die Werkzeuge vermessen werden; und
- Verpackungsmaschine, mittels welcher die Werkstücke und gegebenenfalls die Werkzeuge verpackt werden;
sowie
(e) wenigstens dem zweiten Manipulator (104), mittels welchem die Werkstücke und gegebenenfalls die Werkzeuge zwischen der zweiten Maschine (109, 110) und der Übergabestation (301) transportiert werden.

2. Verfahren nach Anspruch 1, **dadurch gekennzeichnet, dass** zumindest einige zu bearbeitende und/oder teilweise oder gänzlich bearbeitete Werkstücke und gegebenenfalls die Werkzeuge mittels des zweiten Manipulators (104) der zweiten Fertigungszelle (101) an die Übergabestation (301) übergeben werden, wonach sie von der Übergabestation (301) an den ersten Manipulator (4) der ersten Fertigungszelle (1) übergeben werden.

3. Verfahren nach Anspruch 1 oder 2, **dadurch gekennzeichnet, dass** die Werkstücke und gegebenenfalls die Werkzeuge ferner in wenigstens einem zweiten Magazin (102) der zweiten Fertigungszelle (101) bevorratet und mittels des zweiten Manipulators (104) dem zweiten Magazin (102) zu- und abgeführt werden.

4. Verfahren nach einem der Ansprüche 1 bis 3, **dadurch gekennzeichnet, dass** die Übergabestation (301) eine jeweils nur von einer Fertigungszelle (1, 101) zugängliche Aufnahmekammer (302) aufweist und die Aufnahmekammer (302)
- in Richtung des ersten Manipulators (4) der ersten Fertigungszelle (1) ausgerichtet wird, wonach wenigstens ein Werkstück und/oder Werkzeug mittels des ersten Manipulators (4) in der Aufnahmekammer (302) abgelegt wird, wonach die Aufnahmekammer (302) in Richtung des zweiten Manipulators (104) der zweiten Fertigungszelle (101) ausgerichtet wird, wonach das Werkstück und/oder Werkzeug mittels des zweiten Manipulators (104) der Aufnahmekammer (302) entnommen wird;
und/oder
- in Richtung des zweiten Manipulators (104) der zweiten Fertigungszelle (101) ausgerichtet wird, wonach wenigstens ein Werkstück und/oder Werkzeug mittels des zweiten Manipulators (104) in der Aufnahmekammer (302) abgelegt wird, wonach die Aufnahmekammer (302) in Richtung des ersten Manipulators (4) der ersten Fertigungszelle (1) ausgerichtet wird, wonach das Werkstück und/oder Werkzeug mittels des ersten Manipulators (1) der Aufnahmekammer (302) entnommen wird.

5. Verfahren nach Anspruch 4, **dadurch gekennzeichnet, dass** die Aufnahmekammer (302) der Übergabestation (301) dadurch in Richtung des ersten Manipulators (4) bzw. des zweiten Manipulators (104) ausgerichtet wird, indem sie um eine, insbesondere vertikale, Achse (A) gedreht wird.

6. Verfahren nach einem der Ansprüche 1 bis 5, **dadurch gekennzeichnet, dass** die erste Fertigungszelle (1) ausschließlich über wenigstens eine Übergabestation (301) mit der zweiten Fertigungszelle (101) funktional verbunden wird.

7. Vorrichtung zur automatisierten Bearbeitung von Werkstücken, welche insbesondere zur Durchführung eines Verfahrens nach einem der Ansprüche 1 bis 6 geeignet ist, mit einer ersten Fertigungszelle (1), umfassend:
(a) wenigstens ein erstes Magazin (2), welches zur Bevorratung zumindest der Werkstücke und gegebenenfalls von Werkzeugen ausgebildet ist;
(b) wenigstens eine erste Werkzeugmaschine (6) zur Bearbeitung der Werkstücke und gegebenenfalls der Werkzeuge;
(c) wenigstens einen ersten Manipulator (4), welcher zum Transportieren der Werkstücke und gegebenenfalls der Werkzeuge zwischen dem ersten Magazin (2) und der ersten Werkzeugmaschine (6) ausgebildet ist; sowie
(d) eine, insbesondere zentrale, Steuereinrichtung, welche zumindest mit dem ersten Manipulator (4) und der ersten Werkzeugmaschine (6) wirkverbunden ist, um diese zu steuern,
**dadurch gekennzeichnet, dass** innerhalb des Arbeitsraumes des ersten Manipulators (4) eine Übergabestation (301) angeordnet ist, welche darüber hinaus innerhalb des Arbeitsraumes eines zweiten Manipulators (104) wenigstens einer zweiten Fertigungszelle (101) angeordnet ist, umfassend:
(e) wenigstens eine zweite Maschine (109, 110) aus der Gruppe
- zweite Werkzeugmaschine zur Vor- oder Weiterbearbeitung der Werkstücke und gegebenenfalls der Werkzeuge;
- Waschmaschine zum Waschen der Werkstücke und gegebenenfalls der Werkzeuge;
- Messmaschine zum Vermessen der Werkstücke und gegebenenfalls der Werkzeuge; und
- Verpackungsmaschine zum Verpacken der Werkstücke und gegebenenfalls der Werkzeuge,
sowie
(f) wenigstens den zweiten Manipulator (104), welcher zum Transportieren der Werkstücke und gegebenenfalls der Werkzeuge zwischen der zweiten Maschine (109, 110) und der Übergabestation (301) ausgebildet ist,
wobei zumindest der zweite Manipulator (104) und die zweite Maschine (109, 110) der zweiten Fertigungszelle (101) mit der Steuereinrichtung der ersten Fertigungszelle (1) wirkverbunden sind und die Steuereinrichtung zur Koordination zumindest des ersten Manipulators (4) mit dem zweiten Manipulator (104) derart ausgebildet ist, dass zu bearbeitende und/oder teilweise oder gänzlich bearbeitete Werkstücke und gegebenenfalls Werkzeuge von dem ersten Manipulator (4) an die Übergabestation (301) und von dort an den zweiten Manipulator (104) übergebbar sind.

8. Vorrichtung nach Anspruch 7, **dadurch gekennzeichnet, dass** die Steuereinrichtung zur Koordination des ersten Manipulators (4) mit dem zweiten Manipulator (104) derart ausgebildet ist, dass zu bearbeitende und/oder teilweise oder gänzlich bearbeitete Werkstücke und gegebenenfalls Werkzeuge von dem zweiten Manipulator (104) an die Übergabestation (301) und von dort an den ersten Manipulator (4) übergebbar sind.

9. Vorrichtung nach Anspruch 7 oder 8, **dadurch gekennzeichnet, dass** die zweite Fertigungszelle (101) wenigstens ein zweites Magazin (102) aufweist, wobei der zweite Manipulator (104) zum Zu- und Abführen der Werkstücke und gegebenenfalls der Werkzeuge in das bzw. aus dem zweiten Magazin (102) ausgebildet ist.

10. Vorrichtung nach einem der Ansprüche 7 bis 9, **dadurch gekennzeichnet, dass** zumindest einer der Manipulatoren (4, 401), insbesondere sowohl der erste (4) als auch der zweite Manipulator (104), von einem entlang einer stationären Führung (3, 103) einer jeweiligen Fertigungszelle (1, 101) gesteuert translatorisch verlagerbaren Manipulator (4, 104) gebildet ist, welcher insbesondere wenigstens drei weitere, translatorische und/oder rotatorische Freiheitsgrade aufweist.

11. Vorrichtung nach einem der Ansprüche 7 bis 10, **dadurch gekennzeichnet, dass** jede Fertigungszelle (1, 101) vor einem menschlichen Zutritt gesichert ist.

12. Vorrichtung nach einem der Ansprüche 7 bis 11, **dadurch gekennzeichnet, dass** die Übergabestation (301) die erste Fertigungszelle (1) derart von der zweiten Fertigungszelle abtrennt (101), um einen Zutritt von der ersten Fertigungszelle (1) in die zweite Fertigungszelle (101) und umgekehrt stets zu verhindern.

13. Vorrichtung nach einem der Ansprüche 7 bis 12, **dadurch gekennzeichnet, dass** die Übergabestation (301) eine jeweils nur von einer Fertigungszelle (1, 101) zugängliche Aufnahmekammer (302) aufweist, wobei die Übergabestation (301) mit der Steuereinrichtung wirkverbunden ist, um die Aufnahmekammer (302) in einer mit den Bewegungen des ersten und zweiten Manipulators (4, 104) synchronisierten Weise sowohl in Richtung des ersten Manipulators (4) der ersten Fertigungszelle (1) als auch in Richtung des zweiten Manipulators (104) der zweiten Fertigungszelle (101) auszurichten.

14. Vorrichtung nach Anspruch 13, **dadurch gekennzeichnet, dass** die Aufnahmekammer (302) der Übergabestation (301), insbesondere um eine vertikale Achse (A), drehbar gelagert ist, wobei ein steuerbarer Drehantrieb (306) der Aufnahmekammer (302) mit der Steuereinrichtung wirkverbunden ist.

15. Übergabestation (301) einer Vorrichtung zur automatisierten Bearbeitung von Werkstücken gemäß einem der Ansprüche 7 bis 14.
